**Europäisches Patentamt**

**European Patent Office**

**Office européen des brevets**

(19)

(11) Veröffentlichungsnummer : **0 328 709 B1**

(12) # EUROPÄISCHE PATENTSCHRIFT

(45) Veröffentlichungstag der Patentschrift :
**02.11.94 Patentblatt 94/44**

(51) Int. Cl.$^5$ : **G08B 13/18**

(21) Anmeldenummer : **88102422.8**

(22) Anmeldetag : **19.02.88**

(54) **Lichtschranke.**

(43) Veröffentlichungstag der Anmeldung :
**23.08.89 Patentblatt 89/34**

(45) Bekanntmachung des Hinweises auf die
Patenterteilung :
**02.11.94 Patentblatt 94/44**

(84) Benannte Vertragsstaaten :
**AT BE CH DE FR GB IT LI NL SE**

(56) Entgegenhaltungen :
**DE-A- 1 934 321**
**FR-A- 2 520 137**
**US-A- 4 224 608**

(73) Patentinhaber : **CERBERUS AG**
**Alte Landstrasse 411**
**CH-8708 Männedorf (CH)**

(72) Erfinder : **Müller, Kurt**
**Tödihof 4**
**CH-8712 Stäfa (CH)**
Erfinder : **Wüthrich, Alfred**
**Laubstenstrasse 18e**
**CH-8712 Stäfa (CH)**

## Beschreibung

Die Erfindung betrifft eine Lichtschranke gemäß dem Oberbegriff des Patentanspruchs 1.

Aus der DE-A-19′34′321, der DE-A-20′14′107 und der US-A-4,224,608 sind beispielsweise sogenannte Reflexions-Lichtschranken bekannt, bei denen die Strahlung vom Sender über einen Reflektor auf den Empfänger geleitet wird, und ein Intensitätsrückgang der empfangenen Strahlung infolge einer Unterbrechung des Strahlungsweges zwischen Sender, Reflektor und Empfänger mittels einer geeigneten Auswerteschaltung zur Alarmsignalgabe ausgewertet wird. Der Reflektor ist meistens als sogenanntes "Katzenauge" ausgebildet, d.h. er weist eine Vielzahl von Tetraeder-Reflexionselementen auf, wodurch die Strahlung unabhängig vom Einfallswinkel stets genau in die Einfallsrichtung reflektiert wird. Daher können Sender und Empfänger eng benachbart angeordnet werden und Verbindungsleitungen zwischen Sender und Empfänger sind entbehrlich; außerdem ist die Justierung des Reflektors sehr einfach.

Aus der FR-A-2′520′137 ist eine sabotagegeschützte Reflexionslichtschranke bekannt, die einen Block mit zwei Linsen enthält, durch welche die reflektierte Strahlung in zwei Komponenten aufgeteilt wird und auf zwei Empfangssensoren fällt, wobei der Strahlungsempfänger ausgebildet ist, eine Veränderung des Verhältnisses der Intensitäten der Strahlung auf die einzelnen Empfangssensoren festzustellen.

Es können auch mehrere Reflektoren vorgesehen sein, zwischen denen die Strahlung hin und her geworfen wird, so daß ein flächenhafter Schutzvorhang entsteht.

Als Strahlung kann im Prinzip eine beliebige, mit optischen Mitteln fokussierbare, elektromagnetische Strahlung verwendet werden, z.B. Licht. Um eine Lichtschranke, bzw. deren Schutzstrahl nicht ohne weiteres erkennbar zu machen, wird vorzugsweise unsichtbare Strahlung benutzt, insbesondere Infrarot-Strahlung, welche im Sinne der Erfindung in den Begriff "Lichtstrahlung" eingeschlossen ist.

Falls keine speziellen Sicherheitsvorkehrungen getroffen werden, lassen sich solche Lichtschranken jedoch leicht überlisten und sabotiern, indem der Empfänger mittels eines Ersatz-Senders mit Strahlung gleicher Art, bzw. Wellenlänge bestrahlt wird. Um dem abzuhelfen und um die Lichtschranken sabotagesicher zu machen, ist bereits vorgeschlagen worden, die Strahlung zu codieren, z.B. als Impulsreihe mit bestimmter Frequenz, oder mit polarisierter Strahlung zu arbeiten, z.B. durch Vorsetzen eines Porlarisationsfilters vor den Sender und vor den Empfänger oder durch Verwendung einer Strahlungsquelle, welche polarisierte Strahlung aussendet. Solche Lichtschranken lassen sich jedoch ebenfalls leicht sabotieren, indem ein geeigneter Ersatz-Reflektor, z.B. ein analoges Katzenauge, so in den Strahlengang geschoben wird, daß der Empfänger weiterhin ungeschwächte Strahlung erhält, zwischen ErsatzReflektor und Lichtschranken-Reflektor jedoch ein ungeschützter Zwischenraum verbleibt, durch den ein Eindringling unbemerkt passieren kann.

Der vorliegenden Erfindung liegt die Aufgabe zugrunde, eine Lichtschranke mit den im Oberbegriff des Patenanspruchs 1 angegebenen Merkmalen so auszugestalten, daß sie die angeführten Nachteile des Standes der Technik vermeidet und insbesondere eine Lichtschranke zu schaffen, welche eine Unterbrechung des Strahlungswegs mit größerer Sicherheit erkennen läßt, die jedoch außerdem eine verbesserte Sabotagesicherheit aufweist und jeden Versuch, die Lichtschranke unwirksam zu machen, selbsttätig festzustellen gestattet.

Diese Aufgabe wird bei einer Lichtschranke der eingangs genannten Art durch die kennzeichnenden Merkmale des Patentanspruchs 1 gelöst. Bevorzugte Ausführungsformen der Erfindung und Ausgestaltungen sind in den abhängigen Patentansprüchen definiert.

Unter "entgegengesetzten Polarisationsarten" sind dabei im Falle linearer Polarisation zwei aufeinander senkrecht stehende Polarisationsebenen, z.B. horizontal und vertikal, oder im Falle zirkularer Polarisation zwei einander entgegengesetzte Drehrichtungen, d.h. rechts- und linksdrehend polarisiert, zu verstehen.

Gemäß einer bevorzugten Ausführungsform der Erfindung weist der Strahlungsempfänger zwei Sensoren auf, die jeweils für Strahlung einer der beiden entgegengesetzt polarisierten Strahlungsarten empfindlich sind und die in einer Vergleichsschaltung liegen, die jede Änderung des Intensitätsverhältnisses der beiden Strahlungsarten anzeigt. Dabei kann es sich z.B. um eine Differenzschaltung handeln, deren Ausgangssignal im Normalfall Null ist, im Störungs- oder Sabotagefall dagegen einen von Null verschiedenen Wert annimmt.

Gemäß einer besonders bevorzugten Ausgestaltung der erfindungsgemäßen Lichtschranke weisen die Mittel zur Polarisation der Strahlung ein unmittelbar vor dem Reflektor angeordnetes Polarisationsfilter mit Zonen unterschiedlicher Polarisationsart auf, das von der Lichtschrankenstrahlung zweimal durchquert wird und ein bestimmtes Intensitätsverhältnis zwischen den beiden Strahlungsarten unterschiedlicher Polarisation bewirkt. Eine Abdeckung mit einem analog gefilterten Ersatz-Reflektor, ohne das Intensitätsverhältnis zu stören, ist außerordentlich schwierig.

Günstig ist dabei, wenn die Flächen der Zonen entgegengesetzter Polarisation des Filters oder die Intensitäten der Strahlungsanteile unterschiedlicher Polarisation verschieden sind. Besonders vorteilhaft ist es, wenn auch die vom Sender emittierte Strahlung in zwei entgegengesetzten Polarisationsarten polarisiert ist,

2

z.B. mittels eines dem Sender vorgesetzten, ebenfalls in Zonen entgegengesetzter Polarisation unterteilten Polarisationsfilters, wobei die Flächenverhältnisse der Zonen der beiden Polarisationsfilter vor dem Sender und vor dem Reflektor unterschiedlich sind. Dabei kann das Flächenverhältnis derart invers zueinander gewählt werden, daß zwar in der auf die Sensoren auftreffenden Strahlung die Intensität der Strahlung entgegengesetzter Polarisation gleich ist, bei einem Sabotageversuch durch Einschieben eines Reflektors in die Lichtschranke unweigerlich eine Störung des Gleichgewichts eintritt.

Die Erfindung wird an Hand der in den Figuren dargestellten Ausführungsbeispielen näher erläutert. Es zeigen:

Figur 1       eine Reflexionslichtschranke im Schnitt,

Figur 2       eine Filteranordnung vor Sender und Empfänger,

Figur 3       eine Filteranordnung vor dem Reflektor,

Figur 4       eine weitere Filteranordnung vor Sender und Empfänger und

Figur 5       eine weitere Filteranordnung vor Sender und Reflektor.

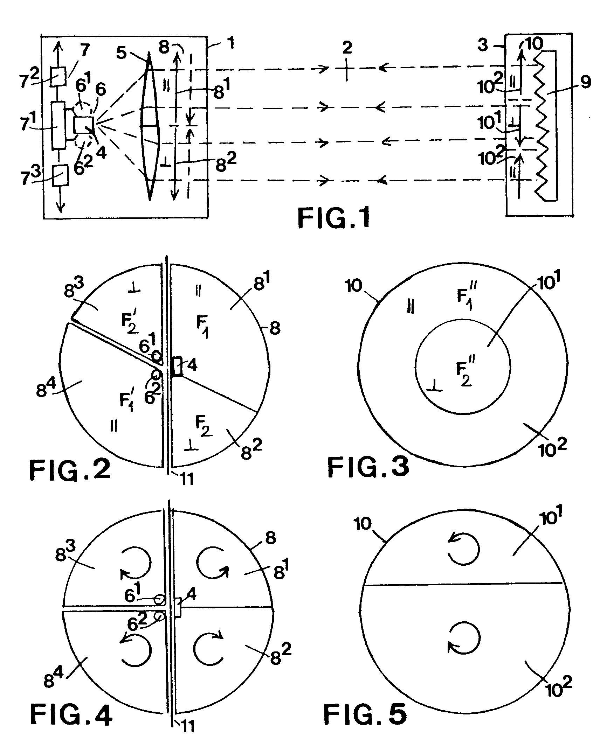

Bei der in Figur 1 wiedergegebenen Reflexionslichtschranke sendet eine Sender/Empfänger-Einheit 1 elektromagnetische Strahlung, beispielsweise im infraroten Spektralbereich, über eine Überwachungsstrecke 2 auf eine Reflexionseinheit 3, welche die Strahlung reflektiert und auf die Sender/Empfänger-Einheit 1 zurückwirft, wo die Intensität der zurückkommenden Strahlung bestimmt wird. Bei Eindringen eines Objekts in die Überwachungsstrecke 2 wird die Strahlung geschwächt oder unterbrochen, und der Intensitätsabfall der zurückkommenden Strahlung wird zur Alarmsignalgabe ausgewertet.

Die Sender/Empfänger-Einheit 1 enthält einen Strahlungssender 4, z.B. eine LED, sowie optische Mittel, wie z.B. eine Sammellinse 5 aus Glas oder transparentem Kunststoff, zur Bündelung der Strahlung des Senders 4 in die Überwachungsstrecke 2 und auf die Reflexionseinheit 3. Eng benachbart zum Sender 4 ist ein Strahlungsempfänger 6 angeordnet, der zwei benachbarte Sensorelemente 61, 62 aufweist, die mit einer Ausschaltung 7 verbunden sind. Diese kann auch getrennt von der Sender/Empfänger-Einheit 1 angeordnet sein.

Weiter enthält die Sender/Empfänger-Einheit 1 Mittel zur Polarisation der ausgesandten Strahlung in Gestalt eines Polarisationsfilters 8. Dieses kann, z.B. wie dargestellt, an der Vorderseite der Sender/Empfänger-Einheit 1 angeordnet sein oder dessen vordere Abschlussscheibe bilden. Es kann aber auch zwischen Sender 4 und Linse 5 liegen, oder die Linse 5 kann selbst aus polarisierendem Material bestehen. Dieses Polarisationsfilter 8 besteht aus mehreren Zonen 81, 82 mit entgegengesetzter Polarisationsart. Beispielsweise kann eine Zone 81 die Strahlung parallel zur Schnittebene oder zur Vertikalen polarisieren, die andere Zone 82 jedoch senkrecht dazu, d.h in der Horizontalebene.

Die Reflektoreinheit 3 weist einen Reflektor 9 auf, der die einfallende Strahlung in der gleichen Richtung zurückwirft. Vorteilhafterweise ist der Reflektor aus Tetraederelementen zusammengesetzt, welche unabhängig vom Einfallswinkel die auftreffende Strahlung wieder genau in die Einfallsrichtung reflektieren, so daß die Reflektoreinheit 3 in einfacher Weise justiert werden kann.

Auch vor dem Reflektor 9 sind Polarisationsmittel 10 angebracht, welche wiederum Zonen 101,102 mit entgegengesetzter Polarisationsart, z.B. parallel und senkrecht zur Schnittebene und zur Vertikalen aufweisen. Auch hier kann das Polarisationsfilter 10 als Abschlussscheibe dienen.

Die Polarisationsmittel 8 und die optischen Bündelungsmittel 5 in der Sender/Empfänger-Einheit 1 sind so ausgebildet und so angeordnet, daß jedes der beiden Sensorelemente 61, 62 nur Strahlung einer der beiden entgegengesetzt polarisierten Strahlungsarten empfängt, z.B. der Sensor 61 nur linear polarisierte Strahlung und der Sensor 62 nur senkrecht dazu polarisierte Strahlung. Die an den beiden Sensoren 61, 62 angeschlossene Auswerteschaltung ist so eingerichtet, jede Änderung des Verhältnisses der Intensitäten der beiden Strahlungsarten unterschiedlicher Polarisation in der empfangenen Strahlung festzustellen und auszuwerten.

Im einfachtsten Fall können dazu die beiden Sensorelemente 61, 62 an eine Vergleichsschaltung 71 angeschlossen sein, die einen Unterschied der Ausgangssignale der Sensorelemente 61, 62 feststellen und über eine Signalschaltung 72 als Störung oder Sabotageversuch melden kann. Außerdem ist eine Alarmschaltung 73 vorgesehen, die einen Intensitätsabfall wenigstens eines der beiden Ausgangssignale zur Alarmsignalgabe auswertet. Bei jeder Unterbrechung der Überwachungsstrecke 2, z.B. durch ein eingedrungenes Objekt wird daher ein Alarmsignal ausgelöst. Bei einem Versuch, die Überwachungsstrecke 2 durch Zwischenschieben eines Ersatzreflektors in den Strahlengang unwirksam zu machen, dabei jedoch die Bestrahlung der Empfänger 6 aufrechtzuerhalten, wird das vorher eingestellte Gleichgewicht der beiden Polarisationsarten in der empfangenen Strahlung gestört, d.h. das Intensitätsverhältnis geändert, und es wird ein Störungssignal ausgelöst.

Figur 2 zeigt die Aufteilung eines besonders vorteilhaften Polarisationsfilters 8 mit verbesserter Sabotagesicherheit in der Sender/Empfänger-Einheit 1, und Figur 3 zeigt ein dazugehöriges Polarisationsfilter 10 in der Reflektoreinheit 3. Der senderseitige Teil des Polarisationsfilters 8 ist in zwei Sektoren 81, 82 entgegengesetzter Polarisation mit einem ungleichen Flächenverhältnis $F1/F2 = \sqrt{x}$ unterteilt. Entsprechend ist das Intensitätsverhältnis der beiden Polarisationsarten in der ausgesandten Strahlung ebenfalls √x. Die empfängerseitige Hälfte des Polarisationsfilters 8 weist ebenfalls zwei ungleiche Sektoren auf, vorzugsweise mit dem gleichen Flächenverhältnis F'1/F'2= √x, wobei der eine Sektor 83 nur senkrecht polarisierte Strahlung auf den Sensor 61 fallen läßt, und der andere Sektor 84 nur parallel polarisierte Strahlung auf den Sensor 61 fallen läßt. Zur Verhinderung einer direkten Überstrahlung vom Sender 4 auf den Empfänger 6 ist zwischen beiden eine Strahlung abschirmende Trennwand 11 vorgesehen.

Das reflektorseitige Filter 10 weist ebenfalls zwei Zonen entgegengesetzter Polarisationsart auf, die im dargestellten Beispiel in Figur 3 als zwei konzentrische Kreisringe 101, 102 ausgeführt sind. Das Flächenverhältnis ist im Vergleich zum sender/empfängerseitigen Filter mit Vorteil als F1''/F2'' = 1/x gewählt. Mit dieser Wahl der Flächenverhältnisse der drei Polarisationsfilter wird erreicht, daß sich nach dreimaliger Änderung des Intensitätsverhältnisses bei Durchgang der Strahlung durch die drei Filter auf den Sensorelementen 61, 62 ein Verhältnis von I1/I2 = √x·(1/x)·√x = 1 der empfangenen Strahlungsintensität mit entgegengesetzter Polarisation ergibt, d.h. das Differenzsignal ist Null.

Bei einer solchen Lichtschranke sind daher im ungestörten Zustand zwar beide Sensorsignale vorhanden, jedoch stellt die Vergleichsschaltung kein Differenzsignal fest. Es wird also weder ein Alarmsignal noch ein Störungssignal gegeben. Wird die Lichtschranke jedoch unterbrochen, so fallen beide Sensorsignale auf Null ab, und es wird ein Alarmsignal ausgelöst. Bei einem Sabotageversuch durch Hineinschieben eines Spiegels oder Katzenauges in den Strahlengang entfällt aber die Polarisationsänderung durch das reflektorseitige Polarisationsfilter 10, so daß das Intensitätsverhältnis I1'/I2' = √x · √x = x, also von Eins verschieden wird. Daher wird in diesem Fall ein Störungssignal ausgelöst, das einen Sabotageversuch anzeigt. Auch wenn die Art der in der Lichtschranke verwendeten Polarisationsfilter, bzw. deren Flächenverhältnis bekannt wäre und für einen Sabotageversuch ein analog gefilterter Reflektor verwendet würde, so würde beim Einschieben in den Strahlengang wenigstens kurzzeitig das Intensitätsverhältnis geändert, was die Auslösung eines Störungssignals bewirken würde.

Statt wie beschrieben, kann die Aufteilung der Filterflächen in Zonen verschiedener Polarisationsart auch in anderer Weise vorgenommen werden. Zur Erzielung der angegebenen vorteilhaften Wirkung sollte wenigstens eines der Polarisationsfilter asymmetrisch ausgebildet sein, vorzugsweise das reflektorseitige Filter. Die Asymmetrie kann dabei in einem ungleichen Flächenverhältnis der Zonen, in einem ungleichen Strahlungsabsorptionsvermögen der Zonen oder in der Ausnutzung der Strahlungscharakteristik und einer entsprechenden geometrischen Filteraufteilung bestehen, sofern damit eine Intensitätsänderung der beiden Strahlen unterschiedlicher Polarisation relativ zueinander bewirkt wird. Empfängerseitig kann die Vergleichsschaltung 71 so ausgebildet sein, daß sie im ungestörten Zustand der Lichtschranke auf einen bestimmten Wert abgestimmt werden kann, so daß bei jeder Abweichung von diesem Wert ein Ungleichgewicht entsteht.

Die Figuren 4 und 5 zeigen Ausführungsarten von Polarisationsfiltern 8, 10 vor Sender 4, Empfänger 6 und Reflektor 9, bei denen statt einer linearen Polarisation eine zirkulare Polarisation stattfindet. Dabei ist wiederum jedes der drei Filter in Zonen entgegengesetzter Polarisationsart unterteilt, d.h. die Zonen 81, 84 und 102 polarisieren die Strahlung linksdrehend zirkular, und die Zonen 82, 83 und 101 polarisieren rechtsdrehend zirkular. Auch hier ist es wieder vorteilhaft, wenn in geeigneter Weise für eine Asymmetrie der Intensitäten der Strahlung entgegengesetzter Polarisation gesorgt wird. Bei Verwendung solcher zirkular polarisiernder Filter ist es besonders vorteilhaft, daß ein Abstimmung der Polarisationsrichtungen und eine Angleichung der drei Polarisationsfilter aneinander, wie sie bei linear polarisierenden Filtern unerläßlich ist, nicht erforderlich ist. Justierungprobleme an voneinder entfernten Orten werden daher von vornherein vermieden.

Abwandlungen der vorstehend beschriebenen Lichtschranke sind im Rahmen der Erfindung gemäß den Ansprüchen möglich und dem Fachmann geläufig. So können z.B. die beiden beschriebenen Ausführungsformen kombiniert werden, indem z.B. das reflektorseitige Filter sowohl Zonen mit bestimmter Polarisationsrichtung als auch mit Drehung der Polarisationsebene aufweist. Eine derartige Lichtschranke ist praktisch nicht sabotierbar.

## Patentansprüche

1. Lichtschranke mit einem Strahlungssender (4), einem Reflektor (9) und einem Strahlungsempfänger (6), wobei optische Mittel (5) zur Bündelung der vom Strahlungssender (4) emittierten Strahlung auf den Reflektor (9) und zur Bündelung der vom Reflektor (9) reflektierten Strahlung auf den Strahlungsempfänger (6), sowie Mittel (8, 10) zur Polarisierung der Strahlung vorgesehen sind, dadurch gekennzeichnet, daß die Mittel (8, 10, 12) zur Polarisierung der Strahlung eingerichtet sind, die Strahlung in zwei Strahlen mit entgegengesetzter Polarität zu polarisieren, daß der Strahlungsempfänger (6) ausgebildet ist, eine Veränderung des Verhältnisses der Intensitäten der entgegengesetzt polarisierten Lichtstrahlen festzustellen und daß vor dem Reflektor (9) und/oder vor dem Sender (4) Polarisationsfilter (8, 10) angeordnet sind, welche Zonen (81, 82, 101, 102) mit entgegengesetzter Polarisationsart aufweisen.

2. Lichtschranke gemäß Patentanspruch 1, dadurch gekennzeichnet, daß der Strahlungsempfänger (6) zwei Sensoren (61, 62) aufweist, die jeweils nur für Strahlung einer der beiden entgegengesetzt polarisierten Lichtstrahelen empfindlich sind.

3. Lichtschranke gemäß Patentanspruch 2, dadurch gekennzeichnet, daß die beiden Sensoren (61, 62) jeweils ein Polarisationsfilter (83, 84) mit entgegengesetzter Polarisationsart aufweisen.

4. Lichtschranke gemäß Patentanspruch 3, dadurch gekennzeichnet, daß die wirksamen Flächen (F1′, F2′) der Polarisationsfilter (83, 84) vor den beiden Sensoren (61, 62) voneinander verschieden sind.

5. Lichtschranke gemäß einem der Patentansprüche 1 bis 4, dadurch gekennzeichnet, daß die beiden Sensoren (61, 62) in einer Vergleichsschaltung (71) miteinander verbunden sind, welche ein Signal auszulösen vermag, wenn das Verhältnis, bzw. die Differenz der Ausgangssignale der beiden Sensoren (61, 62) von vorbestimmten Werten abweicht.

6. Lichtschranke gemäß einem der Patentansprüche 1 bis 5, dadurch gekennzeichnet, daß die Zonen (81, 82, 101, 102) mit entgegengesetzter Polarisationsart durchtretende Strahlung in zwei zueinader senkrechten Polarisationsebenen linear polarisieren.

7. Lichtschranke gemäß einem der Patentansprüche 1 bis 5, dadurch gekennzeichnet, daß die Zonen (81, 82, 101, 102) mit entgegengesetzter Polarisationsart durchtretende Strahlung zirkular mit entgegengesetztem Drehsinn polarisieren.

8. Lichtschranke gemäß einem der Patentansprüche 6 und 7, dadurch gekennzeichnet, daß die Flächen der Zonen (81, 82, 101, 102) mit entgegengesetzter Polarisationsart vor dem Reflektor (9) und/oder vor dem Sender (4) voneinander verschieden sind.

9. Lichtschranke gemäß Patentanspruch 4 und 8, dadurch gekennzeichnet, daß die Verhältnisse der Flächen (81, 82, 83, 84, 101, 102) mit entgegengesetzter Polarisationsart zueinander in den Polarisationsfiltern (8, 10) vor dem Sender (4), Reflektor (9) und Empfänger (6) so aufeinander abgestimmt sind, daß die beiden Sensoren (61, 62) Strahlung gleicher Intensität empfangen.

## Claims

1. Light barrier having a radiation transmitter (4), a reflector (9) and a radiation receiver (6), optical means (5) for focusing the radiation emitted by the radiation transmitter (4) onto the reflector (9) and for focusing the radiation reflected by the reflector (9) onto the radiation receiver (6) as well as means (8, 10) for polarizing the radiation being provided, characterized in that the means (8, 10, 12) for polarizing the radiation are designed to polarize the radiation in two beams having opposite polarity, in that the radiation receiver (6) is designed to detect an alteration in the ratio of the intensities of the oppositely polarized light beams, and in that polarization filters (8, 10) which have zones (81, 82, 101, 102) having opposite polarization types are disposed in front of the reflector (9) and/or in front of the transmitter (4).

2. Light barrier according to Patent Claim 1, characterized in that the radiation receiver (6) has two sensors (61, 62) which are each sensitive only to radiation of one of the two oppositely polarized light beams.

3. Light barrier according to Patent Claim 2, characterized in that the two sensors (61, 62) each have a polarization filter (83, 84) having opposite polarization type.

4. Light barrier according to Patent Claim 3, characterized in that the two active areas (F1′, F2′) of the polarization filters (83, 84) in front of the two sensors (61, 62) are different from one another.

5. Light barrier according to one of Patent Claims 1 to 4, characterized in that the two sensors (61, 62) are connected together in a comparator circuit (71) which is capable of triggering a signal if the ratio, or the difference between the output signals of the two sensors (61, 62) deviates. from predetermined values.

**6.** Light barrier according to one of Patent Claims 1 to 5, characterized in that the zones (81, 82, 101, 102) having opposite polarization type linearly polarize transmitted radiation in two mutually perpendicular polarization planes.

**7.** Light barrier according to one of Patent Claims 1 to 5, characterized in that the zones (81, 82, 101, 102) having opposite polarization type circularly polarize transmitted radiation with an opposite direction of rotation.

**8.** Light barrier according to one of Patent Claims 6 and 7, characterized in that the areas of the zones (81, 82, 101, 102) having opposite polarization type in front of the reflector (9) and/or in front of the transmitter (4) are different from one another.

**9.** Light barrier according to Patent Claim 4 and 8, characterized in that the ratios of the areas (81, 82, 83, 84, 101, 102) having opposite polarization type to one another in the polarization filters (8, 10) in front of the transmitter (4), reflector (9) and receiver (6) are adjusted to one another so that the two sensors (61, 62) receive radiation of equal intensity.


**Revendications**

**1.** Relais (barrière) photoélectrique comportant un émetteur de rayonnement (4), un réflecteur (9) et un récepteur de rayonnement (6), et dans lequel ils sont prévus des moyens optiques (5) pour focaliser sur le réflecteur (9) le rayonnement, émis par l'émetteur de rayonnement (4), et pour focaliser le rayonnement, réfléchi par le réflecteur (9), sur le récepteur de rayonnement (6), ainsi que des moyens (8, 10) pour polariser le rayonnement, caractérisé par le fait que les moyens (8, 10, 12) de polarisation du rayonnement sont agencés de manière à polariser le rayonnement suivant deux faisceaux possédant des polarités opposées, que le récepteur de rayonnement (6) est agencé de manière à déterminer une variation du rapport des intensités des faisceaux lumineux polarisés en des sens opposés, et qu'en amont du réflecteur (9) et/ou en amont de l'émetteur (4) sont disposés des filtres de polarisation (8, 10), qui possèdent des zones (81, 82, 101, 102) présentant des types de polarisation opposés.

**2.** Relais photoélectrique suivant la revendication 1, caractérisé par le fait que le récepteur de rayonnement (6) comporte deux capteurs (61, 62) qui sont respectivement sensibles uniquement à un rayonnement de l'un des deux faisceaux de lumière polarisés en des sens opposés.

**3.** Relais photoélectrique suivant la revendication 2, caractérisé par le fait que les deux capteurs (61, 62) possèdent des filtres de polarisation respectifs (83, 84) ayant des types de polarisation opposés.

**4.** Relais photoélectrique suivant la revendication 3, caractérisé par le fait que les surfaces actives (F1′, F2′) des filtres de polarisation (83, 84) disposées en avant des deux capteurs (61, 62) sont différentes.

**5.** Relais photoélectrique suivant l'une des revendications 1 à 4, caractérisé par le fait que les deux capteurs (61, 62) sont reliés entre eux dans un circuit comparateur (71) qui peut déclencher l'envoi d'un signal lorsque le rapport ou la différence entre les signaux de sortie des capteurs (61, 62) s'écarte de valeurs prédéterminées.

**6.** Relais photoélectrique suivant l'une des revendications 1 à 5, caractérisé par le fait que les zones (81, 82, 101, 102) qui possèdent des types de polarisation opposés, polarisent linéairement le rayonnement traversant, dans deux plans de polarisation perpendiculaires entre eux.

**7.** Relais photoélectrique suivant l'une des revendications 1 à 5, caractérisé par le fait que les zones (81, 82, 101, 102) ayant des types de polarisation opposés polarisent circulairement le rayonnement traversant, avec des sens de rotation opposés.

**8.** Relais photoélectrique suivant les revendications 6 et 7, caractérisé en ce que les surfaces des zones (81, 82, 101, 102) ayant des types de polarisation opposés et disposées devant le réflecteur (9) et/ou devant l'émetteur (4), sont différentes.

**9.** Relais photoélectrique suivant les revendi-cations 4 à 8, caractérisé par le fait que les rapports des surfaces (81, 82, 83, 84, 101, 102) qui ont des types de polarisation oppposés, sont accordés entre eux, dans les filtres de polarisation (8, 10) devant l'émetteur (4), le réflecteur (9) et le récepteur (6), de telle sorte que les deux capteurs (61, 62) reçoivent des rayonnements de même intensité.

FIG.1

FIG.2

FIG.3

FIG.4

FIG.5